# EUROPEAN PATENT APPLICATION

(11) **EP 4 787 924 A1**
(43) Date of publication of application: **05.08.2026**
(21) Application number: 23953528.9
(22) Date of filing: 27.09.2023
(51) Int. Cl.: H04W 24/02

(54) **COMMUNICATION METHOD, TERMINAL, NETWORK DEVICE, AND STORAGE MEDIUM**

(71) Applicant: Beijing Xiaomi Mobile Software Co., Ltd., Beijing 100085 (CN)
(72) Inventor: LIU, Min, Beijing 100085 (CN)
(74) Representative: Stöckeler, Ferdinand
(86) International application number: PCT/CN2023/122154
(87) International publication number: WO 2025/065374

(57) **Abstract**

The present disclosure relates to a communication method, a terminal, a network device, and a storage medium, wherein the communication method is executed by means of a terminal. The method comprises: sending first information of a first decoding model to a network device, wherein the first decoding model is used for decoding first data of a terminal, the first information of the first decoding model is used for indicating the similarity between second data and a first measurement result, which second data is obtained by means of the first decoding model decoding the first data, and the first data is obtained by means of coding the first measurement result. Provided in the embodiments is a solution for reporting first information of a first decoding model to a network device, so as to ensure the reliability of information reported by a terminal, thereby ensuring the accuracy of supervising performed on a decoding model, and ensuring the operation reliability of the decoding model.

## Description

### TECHNICAL FIELD

The present disclosure relates to the field of communication technology, and specifically to a communication method, a terminal, a network device and a storage medium.

### BACKGROUND

With the rapid development of mobile communication technology, communication between devices may realize data transmission through model encoding, so as to achieve the purpose of data compression, thereby saving transmission resources. Therefore, there is a need to supervise whether an operation process of a model meets requirements, so as to realize supervision of the model.

### SUMMARY

The present disclosure solves the problem of how a terminal reports an operation process of a supervised decoding model, thereby ensuring the reliability of information reported by the terminal, and further ensuring the accuracy of supervising the decoding model and the reliability of operation of the decoding model.

Embodiments of the present disclosure provide a communication method, a terminal, a network device, and a storage medium.

According to a first aspect of the embodiments of the present disclosure, a communication method is provided, including: sending, by a terminal, first information of a first decoding model to a network device, in which the first information is used to represent a similarity between the first decoding model set on the terminal and a second decoding model set on the network device, the first decoding model is used by the terminal to decode first data, and the second decoding model is used by the network device to decode the first data received; the first data is obtained by encoding a first measurement result by the terminal.

According to a second aspect of the embodiments of the present disclosure, a communication method is provided, including: receiving first information of a first decoding model sent by a terminal, in which the first information is used to represent a similarity between the first decoding model set on the terminal and a second decoding model set on the network device, the first decoding model is used by the terminal to decode first data, and the second decoding model is used by the network device to decode the first data received; the first data is obtained by encoding a first measurement result by the terminal.

According to a third aspect of the embodiments of the present disclosure, a communication method is provided, including: sending, by a terminal, first information of a first decoding model to a network device, in which the first information is used to represent a similarity between the first decoding model set on the terminal and a second decoding model set on the network device, the first decoding model is used by the terminal to decode first data, and the second decoding model is used by the network device to decode the first data received; the first data is obtained by encoding a first measurement result by the terminal; and receiving, by the network device, the first information of the first decoding model sent by the terminal.

According to a fourth aspect of the embodiments of the present disclosure, a terminal is provided, including: a transceiver module, configured for the terminal to send first information of a first decoding model to a network device, wherein the first information is used to represent a similarity between the first decoding model set on the terminal and a second decoding model set on the network device, the first decoding model is used by the terminal to decode first data, and the second decoding model is used by the network device to decode the first data received; the first data is obtained by encoding a first measurement result by the terminal.

According to a fifth aspect of the embodiments of the present disclosure, a network device is provided, including: a transceiver module, configured to receive first information of a first decoding model sent by a terminal, wherein the first information is used to represent a similarity between the first decoding model set on the terminal and a second decoding model set on the network device, the first decoding model is used by the terminal to decode first data, and the second decoding model is used by the network device to decode the first data received; the first data is obtained by encoding a first measurement result by the terminal.

According to a sixth aspect of the embodiments of the present disclosure, a terminal is provided, including one or more processors, in which the terminal is configured to perform any method of the first aspect of the embodiments.

According to a seventh aspect of the embodiments of the present disclosure, a network device is provided, including one or more processors, in which the network device is configured to perform any method of the second aspect of the embodiments.

According to an eighth aspect of the embodiments of the present disclosure, a communication system is provided, including a terminal and a network device. The terminal is configured to perform the communication method of the first aspect of the embodiments. The network device is configured to perform the communication method of the second aspect of the embodiments.

According to a ninth aspect of the embodiments of the present disclosure, a storage medium having instructions stored thereon is provided. When the instructions are running on a communication device, the communication device is caused to perform the method of the first aspect or the second aspect of the embodiments.

### BRIEF DESCRIPTION OF THE DRAWINGS

The drawings described herein are used to provide a further understanding of the embodiments of the present disclosure and constitute a part of the present disclosure. The illustrative embodiments of the present disclosure and their descriptions are used to explain the embodiments of the present disclosure and do not constitute an improper limitation on the embodiments of the present disclosure, in which:
FIG. 1 is a schematic diagram of a communication system according to an embodiment of the present disclosure;
FIG. 2 is an interactive diagram of a communication method according to an embodiment of the present disclosure;
FIG. 3A is a flowchart of a communication method according to an embodiment of the present disclosure;
FIG. 3B is a flowchart of a communication method according to an embodiment of the present disclosure;
FIG. 4A is a flowchart of a communication method according to an embodiment of the present disclosure;
FIG. 4B is a flowchart of a communication method according to an embodiment of the present disclosure;
FIG. 5 is a flowchart of a communication method according to an embodiment of the present disclosure;
FIG. 6 is a flowchart of a communication method according to an embodiment of the present disclosure;
FIG. 7A is a block diagram of a terminal according to an embodiment of the present disclosure;
FIG. 7B is a block diagram of a network device according to an embodiment of the present disclosure;
FIG. 8A is a block diagram of a communication device according to an embodiment of the present disclosure; and
FIG. 8B is a block diagram of a chip according to an embodiment of the present disclosure.

### DETAILED DESCRIPTION

Embodiments of the present disclosure propose a communication method, a terminal and a storage medium.

According to a first aspect of the embodiments of the present disclosure, a communication method is provided, including:
sending, by a terminal, first information of a first decoding model to a network device, in which the first information is used to represent a similarity between the first decoding model set on the terminal and a second decoding model set on the network device, the first decoding model is used by the terminal to decode first data, and the second decoding model is used by the network device to decode the first data received; the first data is obtained by encoding a first measurement result by the terminal.

In the above embodiments, a solution is provided for reporting the first information of the first decoding model to the network device, which ensures the reliability of the information reported by the terminal, thereby ensuring the accuracy of supervising the decoding model and the reliability of an operation of the decoding model.

In combination with some embodiments of the first aspect, in some embodiments, the first information includes at least one of:
second information and third information, in which the second information is used to represent a difference between second data obtained by decoding the first data using the first decoding model and the first measurement result, and the third information is used to represent a difference between a decoding performance of the second decoding model and a decoding performance of the first decoding model;
a sum of second information and third information;
a magnitude relationship between a sum of second information and third information and a first similarity threshold;
second information;
a magnitude relationship between second information and a second similarity threshold;
a similarity calculated based on a specific codebook type; or
a magnitude relationship between a sum of second information and third information and a similarity calculated based on a specific codebook type.

In the above embodiments, the content included in the first information reported by the terminal is specified, which expands the diversity of the information reported by the terminal, thereby ensuring the accuracy of the information reported by the terminal.

In combination with some embodiments of the first aspect, in some embodiments, the decoding performance of the first decoding model includes a difference between the second data obtained by decoding the first data using the first decoding model and the first measurement result; the decoding performance of the second decoding model includes a difference between third data obtained by decoding the first data received using the second decoding model and the first measurement result.

In combination with some embodiments of the first aspect, in some embodiments, the method further includes:
receiving configuration information sent by the network device, in which the configuration information indicates a configuration of the terminal when sending the first information.

In the above embodiments, the network device configures for the terminal the configuration for sending the first information, which ensures that the terminal sends the first information based on the configuration, and ensures the accuracy of the first information sent by the terminal.

In combination with some embodiments of the first aspect, in some embodiments, the configuration information includes at least one of:
a report configuration identification;
a type of the first information;
a time domain type;
a frequency domain type;
a resource for sending the first information;
a used codebook type; or
an associated downlink reference signal resource.

In the above embodiments, the content included in the configuration information is specified to ensure the diversity of the configuration information, thereby ensuring the accuracy of the first information sent by the terminal based on the configuration information.

In combination with some embodiments of the first aspect, in some embodiments, the time domain type includes any one of a semi-static type or an aperiodic type.

In combination with some embodiments of the first aspect, in some embodiments, the frequency domain type includes any one of a wideband type or a narrowband type.

In combination with some embodiments of the first aspect, in some embodiments, the associated downlink reference signal resource includes at least one of:
a reference signal resource identifier;
a reference signal resource set identifier;
a reference signal resource configuration identifier; or
a demodulation reference signal (DMRS) resource.

In combination with some embodiments of the first aspect, in some embodiments, the method further includes:
receiving a reference signal sent by the network device; and
measuring the reference signal to obtain the first measurement result, in which the first measurement result is used to determine the second information.

In the above embodiments, the terminal measures the reference signal sent by the network device to determine the second information according to the obtained first measurement result, and then monitors the operation process of the decoding model to ensure the accuracy of the operation of the decoding model.

In combination with some embodiments of the first aspect, in some embodiments, the method further includes:
encoding the first measurement result using a first encoding model to obtain the first data;
decoding the first data using the first decoding model to obtain second data; and
determining the first information based on the second data and the first measurement result.

In the above embodiments, the second information is calculated by using the first encoding model and the first decoding model to ensure the accuracy of the calculated similarity value.

According to a second aspect of the embodiments of the present disclosure, a communication method is provided, including:
receiving first information of a first decoding model sent by a terminal, in which the first information is used to represent a similarity between the first decoding model set on the terminal and a second decoding model set on the network device, the first decoding model is used by the terminal to decode first data, and the second decoding model is used by the network device to decode the first data received; the first data is obtained by encoding a first measurement result by the terminal.

In some embodiments, the first information includes at least one of:
second information and third information, in which the second information is used to represent a difference between second data obtained by decoding the first data using the first decoding model and the first measurement result, and the third information is used to represent a difference between a decoding performance of the second decoding model and a decoding performance of the first decoding model;
a sum of second information and third information;
a magnitude relationship between a sum of second information and third information and a first similarity threshold;
second information;
a magnitude relationship between second information and a second similarity threshold;
a similarity calculated based on a specific codebook type; or
a magnitude relationship between a sum of second information and third information and a similarity calculated based on a specific codebook type.

In some embodiments, the decoding performance of the first decoding model includes a difference between the second data obtained by decoding the first data using the first decoding model and the first measurement result; the decoding performance of the second decoding model includes a difference between third data obtained by decoding the first data received using the second decoding model and the first measurement result.

In some embodiments, the method further includes:
sending configuration information to the terminal, in which the configuration information indicates a configuration of the terminal when sending the first information.

In some embodiments, the configuration information includes at least one of:
a report configuration identification;
a type of the first information;
a time domain type;
a frequency domain type;
a resource for sending the first information;
a used codebook type; or
an associated downlink reference signal resource.

In some embodiments, the time domain type includes any one of a semi-static type or an aperiodic type.

In some embodiments, the frequency domain type includes any one of a wideband type or a narrowband type.

In some embodiments, the associated downlink reference signal resource includes at least one of:
a reference signal resource identifier;
a reference signal resource set identifier;
a reference signal resource configuration identifier; or
a demodulation reference signal (DMRS) resource.

In some embodiments, the method further includes:
sending a reference signal to the terminal, in which the reference signal is measured by the terminal to obtain the first measurement result, and the first measurement result is used to determine the first information.

According to a third aspect of the embodiments of the present disclosure, a communication method is provided, including:
sending, by a terminal, first information of a first decoding model to a network device, in which the first information is used to represent a similarity between the first decoding model set on the terminal and a second decoding model set on the network device, the first decoding model is used by the terminal to decode first data, and the second decoding model is used by the network device to decode the first data received; the first data is obtained by encoding a first measurement result by the terminal; and
receiving, by the network device, the first information of the first decoding model sent by the terminal.

According to a fourth aspect of the embodiments of the present disclosure, a terminal is provided, including: at least one of a transceiver module or a processing module. The terminal is configured to perform alternative implementations of the first aspect or the third aspect.

According to a fifth aspect of the embodiments of the present disclosure, a network device is provided, including: at least one of a transceiver module or a processing module. The network device is configured to perform alternative implementations of the second aspect or the third aspect.

According to a sixth aspect of the embodiments of the present disclosure, a terminal is provided, including:
one or more processors,
in which the terminal is configured to perform any method of the first aspect of the embodiments.

According to a seventh aspect of the embodiments of the present disclosure, a network device is provided, including:
one or more processors,
in which the network device is configured to perform any method of the second aspect of the embodiments.

According to an eighth aspect of the embodiments of the present disclosure, a storage medium having first information stored thereon is provided. When the first information is running on a communication device, the communication device is caused to perform any method of the first aspect, the second aspect or the third aspect of the embodiments.

According to a ninth aspect of the embodiments of the present disclosure, a program product is provided. When the program product is executed by a communication device, the communication device is caused to perform any method of the first aspect, the second aspect or the third aspect of the embodiments.

According to a tenth aspect of the embodiments of the present disclosure, a computer program is provided. When the computer program is running on a communication device, the communication device is caused to perform any method of the first aspect, the second aspect or the third aspect of the embodiments.

According to an eleventh aspect of the embodiments of the present disclosure, a chip or a chip system is provided. The chip or the chip system includes a processing circuit, configured to perform any method of the first aspect, the second aspect or the third aspect of the embodiments.

It is understandable that the above-mentioned terminal, the storage medium, the program product, the computer program, the chip or the chip system are all used to execute the method proposed in the embodiments of the present disclosure. Therefore, regarding the beneficial effects that can be achieved, reference may be made to the beneficial effects in the corresponding method, which will not be repeated here.

The embodiments of the present disclosure provide a communication method, a terminal, a network device, and a storage medium. In some embodiments, the terms such as communication method, information communication method, indication method, etc. may be replaced with each other, the terms such as communication apparatus, information communication apparatus, indication apparatus, etc. may be replaced with each other, and the terms such as information communication system, communication system, etc. may be replaced with each other.

The embodiments of the present disclosure are not exhaustive, but are only illustrative, and are not intended to be a specific limitation on the protection scope of the present disclosure. In the absence of contradiction, each step in a certain embodiment can be implemented as an independent embodiment, and respective steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, respective embodiments can be arbitrarily combined, for example, some or all steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referred to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "aforementioned", "this", etc., may mean "one and only one", or "one or more", "at least one", etc. For example, when using articles such as "a", "an", "the" in English translation, the noun after the article may be understood as a singular expression or a plural expression.

In the embodiments of the present disclosure, "plurality" refers to two or more.

In some embodiments, the terms "at least one of", "one or more", "a plurality of", "multiple" etc. may be used interchangeably.

In some embodiments, descriptions such as "at least one of A, B...", "A and/or B...", "in one case, A; in another case, B", "in response to one case, A; in response to another case, B", etc. may include the following technical solutions according to situations: in some embodiments, A (A is executed independently of B); in some embodiments, B (B is executed independently of A); in some embodiments, one is selected from A and B to be executed (A and B are selectively executed); in some embodiments, A and B (both A and B are executed). When there are more branches such as A, B, C, etc., the above is applicable.

In some embodiments, descriptions such as "A or B...", etc. may include the following technical solutions according to situations: in some embodiments, A (A is executed independently of B); in some embodiments, B (B is executed independently of A); in some embodiments, one is selected from A and B to be executed (A and B are selectively executed). When there are more branches such as A, B, C, etc., the above is applicable.

The prefixes such as "first" and "second" in the embodiments of the present disclosure are only used to distinguish different descriptive objects, and do not constitute restrictions on the position, order, priority, quantity or content of the descriptive objects. For the statement of the descriptive objects, reference may be made to the description in the context of the claims or embodiments, and it should not constitute redundant restrictions due to the use of prefixes. For example, if the descriptive object is "field", the ordinal number before the "field" in the "first field" and the "second field" does not limit the position or order between the "fields", and the terms "first" and "second" do not limit whether the "fields" they modify are in the same message, nor do they limit the order of the "first field" and the "second field". For another example, if the descriptive object is "level", the ordinal number before the "level" in the "first level" and the "second level" does not limit the priority between the "levels". For another example, the number of descriptive objects is not limited by the ordinal number, and can be one or more. Taking the "first apparatus" as an example, the number of "apparatuses" can be one or more. In addition, the objects modified by different prefixes may be the same or different. For example, if the descriptive object is "apparatus", then the "first apparatus" and the "second apparatus" may be the same device or different apparatuses, and their types may be the same or different. For another example, if the descriptive object is "information", then the "first information" and the "second information" may be the same information or different information, and their contents may be the same or different.

In some embodiments, "including A", "comprising A", "used to indicate A", and "carrying A" can be interpreted as directly carrying A or indirectly indicating A.

In some embodiments, terms such as "time/frequency", "time/frequency domain", etc. refer to the time domain and/or the frequency domain.

In some embodiments, the terms such as "in response to...", "in response to determining...", "in the case of...", "at the time of...", "when...", "if...", "provide that...", etc. can be used interchangeably.

In some embodiments, the terms such as "greater than", "greater than or equal to", "not less than", "more than", "more than or equal to", "not less than", "higher than", "higher than or equal to", "not lower than", and "above" can be replaced with each other, and the terms such as "less than", "less than or equal to", "not greater than", "less than", "less than or equal to", "no more than", "lower than", "lower than or equal to", "not higher than", and "below" can be replaced with each other.

In some embodiments, the apparatus and the device can be interpreted as physical or virtual, and their names are not limited to the names recorded in the embodiments, which may be understood as "equipment", "device", "circuit", "network element", "node", "function", "unit", "section", "system", "network", "chip", "chip system", "entity", and "subject" in some cases.

In some embodiments, the term "network" can be understood as apparatuses included in the network, such as an access network device, a core network device or the like.

In some embodiments, "access network device (AN device)" can also called "radio access network device (RAN device)", "base station (BS)", "radio base station", "fixed station", and may be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)" and the like in some embodiments.

In some embodiments, "terminal" or "terminal device" can also called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client" and the like.

In some embodiments, the acquisition of data, information, etc. may comply with the laws and regulations of the country where the data is obtained.

In some embodiments, data, information, etc. may be obtained with the user's consent.

In addition, each element, each row, or each column in the table of the embodiments of the present disclosure may be implemented as an independent embodiment, and the combination of any elements, any rows, or any columns may also be implemented as an independent embodiment.

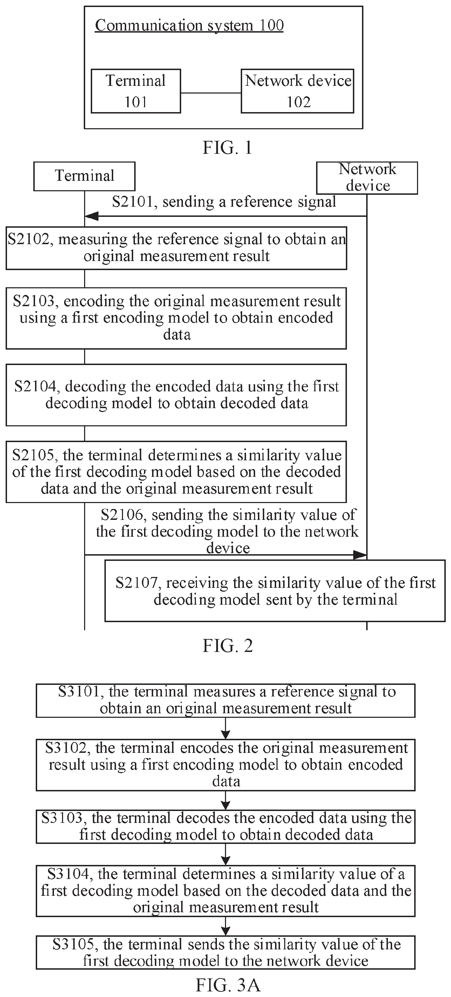

FIG. 1 is a schematic diagram of a communication system according to an embodiment of the present disclosure. As shown in FIG. 1, the method provided in the embodiments may be applied in the communication system 100. The communication system 100 includes a terminal 101, and a network device 102. It should be noted that the communication system 100 may also include other devices, and the present disclosure does not limit the devices included in the communication system 100.

In some embodiments, the terminal 101, for example, may include at least one of a mobile phone, a wearable device, an Internet of Things device, a car with a communication function, a smart car, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but the present disclosure is not limited thereto.

In some embodiments, a network device 102 may include at least one of an access network device or a core network device.

In some embodiments, the access network device may be, for example, a node or device that accesses a terminal to a wireless network. The access network device may include at least one of a node in a satellite communication network, an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system, but the present disclosure is not limited thereto.

In some embodiments, the technical solution of the present disclosure may be applicable to an Open RAN architecture. In this case, the interfaces between or within the access network devices involved in the embodiments of the present disclosure may become internal interfaces of the Open RAN, and the processes and information interactions between these internal interfaces may be implemented through software or programs.

In some embodiments, the access network device may include a central unit (CU) and a distributed unit (DU), in which the CU may also be called a control unit. A protocol layer of the access network device may be divided by adopting the CU-DU structure. Some functions of the protocol layer are centrally controlled by the CU, and some or all of remaining functions of the protocol layer are distributed in the DU which is centrally controlled by the CU, but the present disclosure is not limited thereto.

In some embodiments, the core network device may be one device including one or more network elements, or may be a plurality of devices or a group of devices, each including all or part of the one or more network elements. The network element may be virtual or physical. The core network may include, for example, at least one of an evolved packet core (EPC), a 5G core network (5GCN), and a next generation Core (NGC).

It can be understood that the communication system described in the embodiments of the present disclosure aims to more clearly illustrate the technical solution of the embodiments of the present disclosure, and does not constitute a limitation on the technical solution proposed in the embodiments of the present disclosure. A person skilled in the art can know that with the evolution of the system architecture and the emergence of new business scenarios, the technical solution proposed in the embodiments of the present disclosure are also applicable to similar technical problems.

The following embodiments of the present disclosure may be applied to the communication system 100 or part of the entities shown in FIG. 1, but are not limited thereto. The entities shown in FIG. 1 are examples, and the communication system may include all or part of the entities in FIG. 1, or may include other entities other than those shown in FIG. 1, and the number and form of the entities are arbitrary, each entity may be physical or virtual, and the connection relationships between the entities are examples, and the entities may be connected or disconnected, and the connection may be in any manner, which may be a direct connection or an indirect connection, and may be a wired connection or a wireless connection.

The embodiments of the present disclosure may be applied to, Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

FIG. 2 is an interactive schematic diagram of a communication method according to an embodiment of the present disclosure. As shown in FIG. 2, an embodiment of the present disclosure relates to a communication method, and the method includes the following steps.

At step S2101, a network device sends a reference signal.

In some embodiments, a terminal receives the reference signal. Alternatively, it may be understood that the terminal receives the reference signal sent by the network device.

In some embodiments, the network device sends the reference signal to the terminal.

In some embodiments, the reference signal is used for the terminal to perform measurement. Optionally, the reference signal is a CSI-RS (Channel State Information-Reference Signal) or other signals, which is not limited in the embodiments of the present disclosure.

At step S2102, the terminal measures the reference signal to obtain a first measurement result.

In some embodiments, the reference signal is a CSI-RS. After receiving the CSI-RS, the terminal performs CSI measurement on the CSI-RS to obtain the first measurement result.

In some embodiments, the first measurement result is used to determine second information. In the embodiments of the present disclosure, after the terminal obtains the first measurement result, it is required to compress the first measurement result to achieve transmission of the first measurement result. A first decoding model is located in the terminal. Optionally, the first decoding model has the same function as a second decoding model, and the second decoding model is located in the network device. Optionally, the terminal monitors a decoding process of the second decoding model by detecting a decoding process of the first decoding model.

At step S2103, the terminal encodes the first measurement result using a first encoding model to obtain first data.

In some embodiments, the first decoding model is used to decode the first data of the terminal. In some embodiments, the first data is obtained based on encoding of the first measurement result.

In some embodiments, the first encoding model is provided in the terminal. After obtaining the first measurement result through measurement, the first measurement result is input into the first encoding model, and the first encoding model is used to encode the first measurement result to obtain the first data.

Optionally, the first data refers to a measurement result obtained by reducing the data volume of the first measurement result.

Optionally, the first data refers to a measurement result obtained by compressing and quantizing the first measurement result.

In some embodiments, the first measurement result may also be understood as ground-truth CSI.

At step S2104, the terminal decodes the first data using the first decoding model to obtain second data.

In some embodiments, the first decoding model is provided in the terminal. After the first encoding model outputs the first data, the first data may be input into the first decoding model, and the first decoding model is used to decode the first data to obtain the second data.

In some embodiments, the first encoding model in the terminal is connected to the first decoding model, and an output of the first encoding model is an input of the first decoding model.

At step S2105, the terminal determines first information of the first decoding model based on the second data and the first measurement result.

In the embodiments of the present disclosure, since a measurement result obtained after encoding and decoding the first measurement result is different from the first measurement result, after decoding to obtain the second data, it is required to obtain a similarity value between the second data and the first measurement result, and then determine the first information of the first decoding model.

In some embodiments, the above steps S2103 to S2105 may be performed multiple times to obtain multiple similarity values, which is not limited in the embodiments of the present disclosure.

At step S2106, the terminal sends the first information of the first decoding model to the network device.

In some embodiments, the first information is used to represent a similarity between the first decoding model set on the terminal and the second decoding model set on the network device. Alternatively, the first information may also be understood as that the first information is used to represent a difference between the first decoding model set on the terminal and the second decoding model set on the network device. Alternatively, the first information may also be understood as that the first information is used to represent a difference between an operation performance of the first decoding model set on the terminal and an operation performance of the second decoding model set on the network device.

That is to say, the difference between the first decoding model set on the terminal and the second decoding model set on the network device may be determined through the first information.

In some embodiments, the first decoding model is used by the terminal to decode the first data, and the second decoding model is used by the network device to decode the received first data; the first data is obtained by encoding the first measurement result by the terminal.

In some embodiments, the first information includes at least one of the following.

### (1) Second information and third information

In some embodiments, the second information is used to represent a difference between the second data obtained by decoding the first data using the first decoding model and the first measurement result. The third information is used to represent a difference between a decoding performance of the second decoding model and a decoding performance of the first decoding model. Optionally, the third information is a difference between a historical similarity of the second decoding model and a historical similarity of the first decoding model. Alternatively, it may also be understood that the third information refers to the difference between the first decoding model and the second decoding model.

In some embodiments, the decoding performance of the first decoding model includes the difference between the second data obtained by decoding the first data using the first decoding model and the first measurement result, and the decoding performance of the second decoding model includes a difference between third data obtained by decoding the first data using the second decoding model and the first measurement result.

Optionally, the decoding performance of the first decoding model includes the difference between the second data obtained by decoding the first data using the first decoding model and the first measurement result, expressed by a cosine similarity. Optionally, the decoding performance of the second decoding model includes the difference between the third data obtained by decoding the first data using the second decoding model and the first measurement result, expressed by a cosine similarity.

In some embodiments, the difference in the embodiments of the present disclosure may be represented by a similarity such as cosine similarity, Mahalanobis distance, Pearson similarity, etc., which is not limited in the embodiments of the present disclosure.

In some embodiments, the third information is agreed upon by a communication protocol, or is determined by a difference between a first similarity of the first decoding model and a second similarity of the second decoding model.

Optionally, the difference between the first similarity of the first decoding model and the second similarity of the second decoding model is determined as the third information.

Optionally, the first decoding model may obtain multiple first similarities and multiple second similarities corresponding to the first similarities, then an average value of the multiple first similarities and an average value of the multiple second similarities may be obtained, and a difference between the average value of the first similarities and the average value of the second similarities is determined as the third information.

Optionally, the first similarity may be obtained by using the above steps S2103-S2105, and the second similarity is similar to the first similarity, and an execution process only needs to replace the first decoding model with the second decoding model.

Specifically, the terminal sends the first data to the network device, and the network device decodes the first data using the second decoding model to obtain the second data, and then determines the second similarity based on the second data and the first measurement result.

In some embodiments, after obtaining the similarity value through the above steps S2103-S2105, the terminal may carry a sum of the similarity value and the third information in the first information.

It should be noted that the second decoding model is set in the network device, and the first decoding model and the second decoding model have the same function.

### (2) A sum of the second information and the third information

### (3) A magnitude relationship between the sum of the second information and the third information and a first similarity threshold

In some embodiments, the first similarity threshold is agreed upon by a communication protocol, or configured by the network device, or set by the terminal itself, which is not limited in the embodiments of the present disclosure.

In some embodiments, a preset bit value is used to indicate the magnitude relationship. Optionally, if the sum of the second information and the third information is greater than the first similarity threshold, a preset bit value of 1 is used for indication, and if the sum of the second information and the third information is not greater than the first similarity threshold, a preset bit value of 0 is used for indication. If the sum of the second information and the third information is greater than the first similarity threshold, a preset bit value of 0 is used for indication, and if the sum of the second information and the third information is not greater than the first similarity threshold, a preset bit value of 1 is used for indication.

### (4) Second information

In embodiments of the present disclosure, the first information only needs to carry the second information itself.

### (5) A magnitude relationship between the second information and a second similarity threshold

In some embodiments, the second similarity threshold is agreed upon by a communication protocol, or configured by the network device, or set by the terminal itself, which is not limited in the embodiments of the present disclosure.

In some embodiments, a preset bit value is used to indicate the magnitude relationship. Optionally, if the second information is greater than the second similarity threshold, a preset bit value of 1 is used for indication, and if the second information is not greater than the second similarity threshold, a preset bit value of 0 is used for indication. If the second information is greater than the second similarity threshold, a preset bit value of 0 is used for indication, and if the second information is not greater than the second similarity threshold, a preset bit value of 1 is used for indication.

### (6) A similarity calculated based on a specific codebook type

In some embodiments, the terminal may select a corresponding codeword based on the original CSI measurement result and a codebook based on a codebook type configured by the base station, such as an enhanced Type II codebook, calculate feature vector information based on the original CSI measurement result, and calculate the similarity based on the codeword and the feature vector information.

### (7) A magnitude relationship between the sum of the second information and the third information and the similarity calculated based on the specific codebook type

In some embodiments, a preset bit value is used to indicate the magnitude relationship. Optionally, if the sum of the second information and the third information is greater than the similarity calculated based on the specific codebook type, a preset bit value of 1 is used for indication, and if the sum of the second information and the third information is not greater than the similarity calculated based on the specific codebook type, a preset bit value of 0 is used for indication. If the sum of the second information and the third information is greater than the similarity calculated based on the specific codebook type, a preset bit value of 0 is used for indication, and if the sum of the second information and the third information is not greater than the similarity calculated based on the specific codebook type, a preset bit value of 1 is used for indication.

At step S2107, the network device receives the first information of the first decoding model sent by the terminal.

It should be noted that the network device will also send configuration information to the terminal, the terminal receives the configuration information and then sends the first information to the network device based on the configuration information.

In some embodiments, the configuration information is used to indicate a configuration of the terminal when sending the first information.

In some embodiments, the configuration information includes at least one of the following.

### (1) Report configuration identification

In some embodiments, the report configuration identification is used to indicate the configuration of the terminal for sending the first information. In some embodiments, the report configuration identification refers to Monitor report configuration/setting ID.

### (2) Type of the first information

In some embodiments, the type of the first information is used to indicate the type of reporting the first information. In some embodiments, the type of the first information refers to at least one of the first information in the example in step S2106 above. In some embodiments, the type of the first information refers to report quantity.

### (3) Time domain type

In some embodiments, the time domain type includes any one of a semi-static type or an aperiodic type. In some embodiments, the time domain type refers to a time domain feature.

### (4) Frequency domain type

The frequency domain type includes any one of a wideband type or a narrowband type. In some embodiments, the frequency domain type refers to a frequency domain feature.

### (5) Resource for sending the first information

In some embodiments, the resource for sending the first information include a time domain resource and a frequency domain resource.

### (6) Used codebook type

### (7) Associated downlink reference signal resource

In some embodiments, the associated downlink reference signal resource includes at least one of:
a reference signal resource identifier;
a reference signal resource set identifier;
a reference signal resource configuration identifier; or
a DMRS (Demodulation Reference Signal) resource.

The following describes the information exchanged and transmitted between the terminal and the network device by taking examples.

For example, the terminal reports the third information or an identifier of the second decoding model to the base station, and the identifier of the second decoding model has a corresponding relationship with the third information. The base station sends the configuration information to the terminal, and the configuration information includes that the report quantity configuration is the second information and semi-static reporting, the resource for sending the first information is PUCCH (Physical Uplink Control Channel) resource #1. The base station sends a CSI-RS resource associated with the reporting configuration to the terminal. The base station sends MAC CE (Media Access Control Control Element) information for activating the configuration information to the terminal. The terminal sends HARQ-ACK (acknowledgement) information for the PDSCH (Physical Downlink Shared Channel) containing the MAC CE in slot n. The terminal starts sending the second information on the PUCCH resource #1 in slot (time slot) n+X. The base station sends MAC CE information for deactivating the configuration information to the terminal. The terminal sends HARQ-ACK (acknowledgement) information for the PDSCH containing the MAC CE in slot n. The terminal stops sending the second information on the PUCCH resource #1 in slot n+Y.

For example, the base station sends the configuration information to the terminal, and the configuration information includes that the report quantity configuration is the sum of the second information and the third information, semi-static reporting, and the reporting resource configuration is PUCCH resource#1. The base station sends a CSI-RS resource associated with the reporting configuration to the terminal, and the base station sends MAC CE information for activating the configuration information to the terminal. The terminal sends HARQ-ACK (acknowledgement) information for the PDSCH containing the MAC CE in slot n, and the terminal starts sending the sum of the second information and the third information on the PUCCH resource#1 in slot n+X. The base station sends MAC CE information for deactivating the configuration information to the terminal, and the terminal sends HARQ-ACK (acknowledgement) information for the PDSCH containing the MAC CE in slot n. The terminal stops sending the sum of the second information and the third information on the PUCCH resource#1 in slot n+Y.

For example, the base station sends the configuration information to the terminal, the configuration information includes that the report quantity configuration is a comparison result of the sum of the second information and the third information with the first similarity threshold, semi-static reporting, the reporting resource configuration is PUCCH resource#1, and the used codebook type is eTypeII. The base station sends a CSI-RS resource associated with the reporting configuration to the UE, the base station sends MAC CE information for activating the configuration information to the terminal, the terminal sends HARQ-ACK (acknowledgement) information for the PDSCH containing the MAC CE in slot n, the UE starts sending the comparison result of the sum of the second information and the third information with the first similarity threshold on the PUCCH resource#1 in slot n+X. If the sum of the second information and the third information is greater than the first similarity threshold, 1 is fed back, and if the sum of the second information and the third information is less than the first similarity threshold, 0 is fed back. The base station sends MAC CE information for deactivating the configuration information to the terminal, the terminal sends HARQ-ACK (acknowledgement) information for the PDSCH containing the MAC CE in slot n, and the UE stops sending the comparison result of the sum of the second information and the third information with the first similarity threshold on the PUCCH resource#1 in slot n+Y.

In some embodiments, the name of information or the like is not limited to the names described in embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, terms such as "uplink", "uplink", "physical uplink" may be interchangeable, and terms such as "downlink", "downlink", "physical downlink" may be interchangeable, and terms such as "side", "sidelink", "side communication", "sidelink communication", "direct connection", "direct link", "direct communication", "direct link communication" may be interchangeable.

In some embodiments, "obtain", "acquire", "get", "receive", "transmit", "bi-directionally transmit", "send and/or receive" may be used interchangeably, and may be interpreted as receiving from other entities, obtaining from protocols, obtaining from high layers, obtaining by self-processing, autonomous implementation, etc.

In some embodiments, terms such as "sending", "transmitting", "reporting", "distributing", "transmitting", "bi-directionally transmitting", and "sending and/or receiving" may be used interchangeably.

In some embodiments, terms such as "moment", "time point", "time", and "time position" may be interchangeable, and terms such as "duration", "period", "time window", "window", and "time" may be interchangeable.

In some embodiments, terms such as "certain", "preset", "default", "set", "indicated", "a certain", "any" and "first" may be used interchangeably. Terms such as "certain A", "preset A", "default A", "set A", "indicated A", "a certain A", "any A" and "first A" may be interpreted as A pre-defined in a protocol or the like, or as A obtained through setting, configuration, or indication, or as specific A, a certain A, any A, or first A, but are not limited to this.

The communication method according to the embodiments of the present disclosure may include at least one of step S2101 to step S2107. For example, step S2101 may be implemented as an independent embodiment, step S2102 may be implemented as an independent embodiment, step S2103 may be implemented as an independent embodiment, step S2104 may be implemented as an independent embodiment, step S2105 may be implemented as an independent embodiment, step S2106 may be implemented as an independent embodiment, step S2107 may be implemented as an independent embodiment, steps S2101+S2102 may be implemented as an independent embodiment, steps S2103+S2104+S2105 may be implemented as an independent embodiment, steps S2106+S2107 may be implemented as an independent embodiment, steps S2101+S2102+S2103+S2104+S2105 may be implemented as an independent embodiment, steps S2101+S2102+S2106+S2107 may be implemented as an independent embodiment, steps S2103+S2104+S2105+S2106+S2107 may be implemented as an independent embodiment, but the present disclosure is not limited thereto.

In some embodiments, step S2103, step S2104, step S2105, step S2106 and step S2107 may be optional, and one or more of these steps may be omitted or replaced in different embodiments.

In some embodiments, step S2101, step S2102, step S2106 and step S2107 may be optional, and one or more of these steps may be omitted or replaced in different embodiments.

In some embodiments, step S2101, step S2102, step S2103, step S2104 and step S2105 may be optional, and one or more of these steps may be omitted or replaced in different embodiments.

In some embodiments, reference may be made to other optional implementations described before or after the specification corresponding to FIG. 2.

FIG. 3A is a flowchart of a communication method according to an embodiment of the present disclosure. The communication method is applied in a terminal. As shown in FIG. 3A, an embodiment of the present disclosure relates to a communication method, and the method includes the following steps.

At step S3101, the terminal measures a reference signal to obtain a first measurement result.

Regarding the optional implementation of step S3101, reference may be made to the optional implementation of step S2102 in FIG. 2 and other related parts of the embodiment involved in FIG. 2, which are not repeated in detail here.

At step S3102, the terminal encodes the first measurement result using a first encoding model to obtain first data.

Regarding the optional implementation of step S3102, reference may be made to the optional implementation of step S2103 in FIG. 2 and other related parts of the embodiment involved in FIG. 2, which are not repeated in detail here.

At step S3103, the terminal decodes the first data using the first decoding model to obtain second data.

Regarding the optional implementation of step S3103, reference may be made to the optional implementation of step S2104 in FIG. 2 and other related parts of the embodiment involved in FIG. 2, which are not repeated in detail here.

At step S3104, the terminal determines second information based on the second data and the first measurement result.

Regarding the optional implementation of step S3104, reference may be made to the optional implementation of step S2105 in FIG. 2 and other related parts of the embodiment involved in FIG. 2, which are not repeated in detail here.

At step S3105, the terminal sends the first information of the first decoding model to the network device.

Regarding the optional implementation of step S3105, reference may be made to the optional implementation of step S2106 in FIG. 2 and other related parts of the embodiment involved in FIG. 2, which are not repeated in detail here.

The communication method according to the embodiments of the present disclosure may include at least one of step S3101 to step S3105. For example, step S3101 may be implemented as an independent embodiment, step S3102 may be implemented as an independent embodiment, step S3103 may be implemented as an independent embodiment, step S3104 may be implemented as an independent embodiment, step S3105 may be implemented as an independent embodiment, or at least two steps may be combined, but the present disclosure is not limited thereto.

In some embodiments, step S3101, step S3102, step S3103 and step S3104 may be optional, step S3101 and step S3105 may be optional, step S3102, step S3103, step S3104 and step S3105 may be optional, and one or more of these steps may be omitted or replaced in different embodiments, but the present disclosure is not limited thereto.

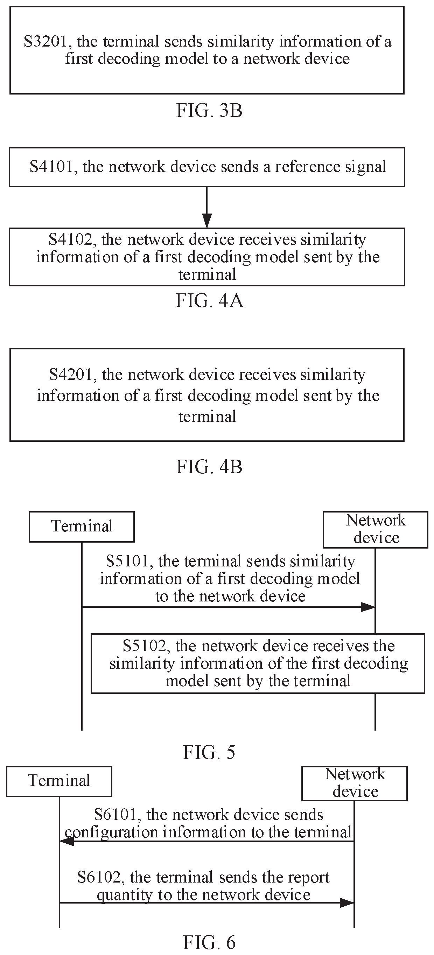

FIG. 3B is a flowchart of a communication method according to an embodiment of the present disclosure. The communication method is applied in a terminal. As shown in FIG. 3B, an embodiment of the present disclosure relates to a communication method, and the method includes the following steps.

At step S3201, the terminal sends first information of a first decoding model to a network device.

Regarding the optional implementation of step S3201, reference may be made to the optional implementations of step S2106 in FIG. 2 and step S3105 in FIG. 3A, and other related parts of the embodiment involved in FIG. 2 and FIG. 3A, which are not repeated in detail here.

FIG. 4A is a flowchart of a communication method according to an embodiment of the present disclosure. The communication method is applied in a network device. As shown in FIG. 4A, an embodiment of the present disclosure relates to a communication method, and the method includes the following steps.

At step S4101, the network device sends a reference signal.

Regarding the optional implementation of step S4101, reference may be made to the optional implementation of step S2101 in FIG. 2, and other related parts of the embodiment involved in FIG. 2, which are not repeated in detail here.

In some embodiments, a terminal receives the reference signal sent by the network device, but the present disclosure is not limited thereto, the terminal may receive the reference signal sent by another entity.

In some embodiments, the terminal obtains the reference signal specified by a protocol.

In some embodiments, the terminal obtains the reference signal from a higher layer.

In some embodiments, the terminal performs processing to obtain the reference signal.

In some embodiments, step S4101 is omitted, and the terminal autonomously implements the function indicated by the reference signal, or the above function is default or acquiescent.

At step S4102, the network device receives first information of a first decoding model sent by the terminal.

Regarding the optional implementation of step S4102, reference may be made to the optional implementation of step S2107 in FIG. 2, and other related parts of the embodiment involved in FIG. 2, which are not repeated in detail here.

The communication method according to the embodiments of the present disclosure may include at least one of step S4101 to step S4102. For example, step S4101 may be implemented as an independent embodiment, step S4102 may be implemented as an independent embodiment, but the present disclosure is not limited thereto.

In some embodiments, step S4101 may be optional, and one or more of these steps may be omitted or replaced in different embodiments.

In some embodiments, step S4102 may be optional, and one or more of these steps may be omitted or replaced in different embodiments.

FIG. 4B is a flowchart of a communication method according to an embodiment of the present disclosure. The communication method is applied in a network device. As shown in FIG. 4B, an embodiment of the present disclosure relates to a communication method, and the method includes the following steps.

At step S4201, the network device receives first information of a first decoding model sent by a terminal.

In some embodiments, the first information is used to represent a similarity between the first decoding model set on the terminal and a second decoding model set on the network device, the first decoding model is used by the terminal to decode first data, and the second decoding model is used by the network device to decode the first data; the first data is obtained by encoding a first measurement result by the terminal.

In some embodiments, the first information includes at least one of:
second information and third information, in which the second information is used to represent a difference between second data obtained by decoding the first data using the first decoding model and the first measurement result, and the third information is used to represent a difference between a decoding performance of the second decoding model and a decoding performance of the first decoding model;
a sum of second information and third information;
a magnitude relationship between a sum of second information and third information and a first similarity threshold;
second information;
a magnitude relationship between second information and a second similarity threshold;
a similarity calculated based on a specific codebook type; or
a magnitude relationship between a sum of second information and third information and a similarity calculated based on a specific codebook type.

In some embodiments, the decoding performance of the first decoding model includes a difference between the second data obtained by decoding the first data using the first decoding model and the first measurement result; the decoding performance of the second decoding model includes a difference between third data obtained by decoding the first data received using the second decoding model and the first measurement result.

In some embodiments, the method further includes:
sending configuration information to the terminal, in which the configuration information indicates a configuration of the terminal when sending the first information.

In some embodiments, the configuration information includes at least one of:
a report configuration identification;
a type of the first information;
a time domain type;
a frequency domain type;
a resource for sending the first information;
a used codebook type; or
an associated downlink reference signal resource.

In some embodiments, the time domain type includes any one of a semi-static type or an aperiodic type.

In some embodiments, the frequency domain type includes any one of a wideband type or a narrowband type.

In some embodiments, the associated downlink reference signal resource includes at least one of:
a reference signal resource identifier;
a reference signal resource set identifier;
a reference signal resource configuration identifier; or
a DMRS resource.

In some embodiments, the method further includes:
sending a reference signal to the terminal, in which the reference signal is measured by the terminal to obtain the first measurement result, and the first measurement result is used to determine the first information.

FIG. 5 is a flowchart of a communication method according to an embodiment of the present disclosure. As shown in FIG. 5, an embodiment of the present disclosure relates to a communication method, and the method includes the following steps.

At step S5101, a terminal sends first information of a first decoding model to a network device.

At step S5102, the network device receives the first information of the first decoding model sent by the terminal.

Regarding the optional implementation of step S5101, reference may be made to the optional implementation of step S2106 in FIG. 2 and step S3105 in FIG. 3A, and other related parts of the embodiments involved in FIG. 2 and FIG. 3A, which are not repeated in detail here.

Regarding the optional implementation of step S5102, reference may be made to the optional implementation of step S2107 in FIG. 2 and step S4102 in FIG. 4A, and other related parts of the embodiments involved in FIG. 2 and FIG. 4A, which are not repeated in detail here.

In some embodiments, the above method may include the method of any of the above-mentioned embodiments at the communication system side, the terminal side, the network device side, etc., which will not be repeated here.

FIG. 6 is a flowchart of a communication method according to an embodiment of the present disclosure. As shown in FIG. 6, an embodiment of the present disclosure relates to a communication method, and the method includes the following steps.

At step S6101, a network device sends configuration information to a terminal.

In some embodiments, the configuration information at least includes one of:
o monitor report configuration/setting ID,
o report quantity,
o time domain feature,
o frequency domain feature,
o reporting resource,
o existing codebook information, such as eTypeII codebook, or
o associated DL RS resource or DL channel, that is, the associated downlink reference signal resource.

At step S6102, the terminal sends the report quantity to the network device.

In some embodiments, the report quantity may be at least one of:
o (1) SGCS (spectral graph convolutional networks) #1 + Gap (spacing),
o (2) a relationship between SGCS#1+Gap and an SGCS threshold, such as being above or below the threshold, which is indicated by 1 bit,
o (3)SGCS#1,
o (4) a relationship between SGCS#1 and the SGCS threshold, such as being above the threshold or not above the threshold, which is indicated by 1 bit,
o (5) SGCS_codebook (codebook) of an existing specific codebook,
o (6) a relationship between SGCS#1+Gap and SGCS_codebook. For example, if SGCS#1+Gap>=SGCS_codebook, the feedback is 1; if SGCS#1+Gap<SGCS_codebook, the feedback is 0.

In some embodiments, the SGCS threshold in (2) and/or (4) is configured by the base station to the terminal. In some embodiments, SGCS#1 refers to a similarity determined based on the second data of the first decoding model and the first measurement result in the above embodiments. In some embodiments, Gap is the third information.

In some embodiments, the time domain type may be a semi-static type or an aperiodic type.

In some embodiments, when the report quantity is (1)(3)(5), the semi-static reporting is used; when the report quantity is (2)(4)(6), the aperiodic reporting/conditional reporting is used.

In some embodiments, the frequency domain feature may be the wideband reporting or the narrowband reporting, that is, the report quantity such as SGCS#1 corresponds to the monitoring result of the wideband, or the CSI supervision result for M sub-bands.

In some embodiments, the associated downlink reference signal resource may be a CSI-RS resource ID, a CSI-RS resource set ID or a CSI-RS resource configuration ID; the associated downlink reference signal resource may also be a DMRS resource; the associated downlink channel may be a PDSCH.

In some embodiments, the report quantity is obtained by the UE performing channel measurement and processing and calculating the channel information.

o The real CSI is channel feature vector information. The UE obtains the channel matrix H by performing measurement based on the downlink reference signal, such as CSI-RS and DMRS. The UE performs SVD decomposition on H to obtain feature vector information.

o SGCS#1 is obtained as follows, the UE uses an encoder and a proxy decoder to encode and decode the real CSI, and calculates SGCS#1 based on the recovered CSI and the real CSI.
o Gap is a feature value of the proxy model itself, and gap may be 0.
o SGCS_codebook is obtained as follows, a codeword is calculated based on the codebook configured by the base station, such as eTypeII and the measured channel H, and the SGCS is calculated based on the codeword and the real CSI.

In some embodiments, in step 1, the UE reports the gap information of the proxy model or the proxy model ID (the gap information is implicitly indicated by the proxy model ID) to the base station through a capability report.

In step 2, the base station sends a monitor reporting configuration to the UE through RRC signaling. The monitor reporting configuration #1 includes that the report quantity configuration is SGCS#1, the reported time domain feature configuration is semi-static reporting, and the reporting resource configuration is PUCCH resource#1. The base station sends a CSI-RS resource associated with the reporting configuration to the UE.

In step 3, the base station sends MAC CE information to the UE to activate the monitor reporting configuration#1.

In step 4, the UE sends HARQ-ACK (acknowledgement) information for the PDSCH containing the MAC CE in slot n, and the UE starts sending SGCS#1 on the PUCCH resource#1 in slot n+X.

In step 5, the base station sends MAC CE information to the UE to deactivate the monitor reporting configuration#1.

In step 6, the UE sends HARQ-ACK (acknowledgement) information for the PDSCH containing the MAC CE in slot n, and the UE stops sending SGCS#1 on the PUCCH resource#1 in slot n+Y.

In some embodiments, in step 1, the base station sends a monitor reporting configuration to the UE through RRC signaling. The monitor reporting configuration #1 includes that the report quantity configuration is SGCS (SGCS#1+Gap), the reported time domain feature configuration is semi-static reporting, and the reporting resource configuration is PUCCH resource#1. The base station sends a CSI-RS resource associated with the reporting configuration to the UE.

In step 2, the base station sends MAC CE information to the UE to activate the specific monitor reporting configuration#1.

In step 3, the UE sends HARQ-ACK (acknowledgement) information for the PDSCH containing the MAC CE in slot n, and the UE starts sending SGCS on the PUCCH resource #1 in slot n+X.

In step 4, the base station sends MAC CE information to the UE to deactivate the specific monitor reporting configuration#1.

In step 5, the UE sends HARQ-ACK (acknowledgement) information for the PDSCH containing the MAC CE in slot n, and the UE stops sending SGCS on the PUCCH resource #1 in slot n+Y.

In some embodiments, in step 1, the base station sends a monitor reporting configuration to the UE through RRC signaling. The monitor reporting configuration #1 includes that the report quantity configuration is a comparison result of SGCS (SGCS#1+Gap) with SGCS_thr, the reported time domain feature configuration is semi-static reporting, the reporting resource configuration is PUCCH resource#1, the codebook configuration is eTypeII, and the SGCS threshold is SGCS_thr. The base station sends a CSI-RS resource associated with the reporting configuration to the UE.

In step 2, the base station sends MAC CE information to the UE to activate the specific monitor reporting configuration#1.

In step 3, the UE sends HARQ-ACK (acknowledgement) information for the PDSCH containing the MAC CE in slot n. The UE starts sending the comparison result of SGCS#1+gap with SGCS_codebook on the PUCCH resource#1 in slot n+X. If SGCS#1+Gap>=SGCS_codebook, the feedback is 1; if SGCS#1+Gap<SGCS_codebook, the feedback is 0.

In step 4, the base station sends MAC CE information to the UE to deactivate the specific monitor reporting configuration#1.

In step 5: the UE sends HARQ-ACK (acknowledgement) information for the PDSCH containing the MAC CE in slot n, and the UE stops sending the comparison result of SGCS#1+gap with SGCS_codebook on the PUCCH resource#1 in slot n+Y.

In the embodiments of the present disclosure, part or all of the steps and their optional implementations may be arbitrarily combined with part or all of the steps in other embodiments, or may be arbitrarily combined with optional implementations of other embodiments.

The embodiments of the present disclosure also propose an apparatus for implementing any of the above methods, for example, an apparatus is proposed, the above apparatus includes units or modules for implementing various steps performed by the terminal in any of the above methods. For another example, another apparatus is proposed, including units or modules for implementing various steps performed by the network device (such as an access network device, a core network function node, a core network device, etc.) in any of the above methods.

It should be understood that the division of the units or modules in the above apparatus is only a division of logical functions, and in an actual implementation, they may be fully or partially integrated into one physical entity, or they may be physically separated. In addition, the units or modules in the apparatus may be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatus. The processor is, for example, a general-purpose processor, such as a central processing unit (CPU) or a microprocessor, and the memory is a memory inside the device or a memory outside the device. Alternatively, the units or modules in the apparatus may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which may include a large number of logic gate circuits, and the connection relationship between the logic gate circuits is configured by a configuration file, so as to realize the functions of some or all of the above units or modules. All units or modules of the above apparatuses may be realized in the form of a processor calling software, or in the form of a hardware circuit, or in part by a processor calling software, and the rest by a hardware circuit.

In the embodiments of the present disclosure, the processor is a circuit with a signal processing capability. In one implementation, the processor may be a circuit with an instruction reading and running capability, such as a central processing unit (CPU), a microprocessor, a graphics processing unit (GPU) (which may be understood as a microprocessor), or a digital signal processor (DSP), etc. In another implementation, the processor may realize certain functions through the logical relationship of the hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the processor loads a configuration document to implement the process of hardware circuit configuration, which may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU), etc.

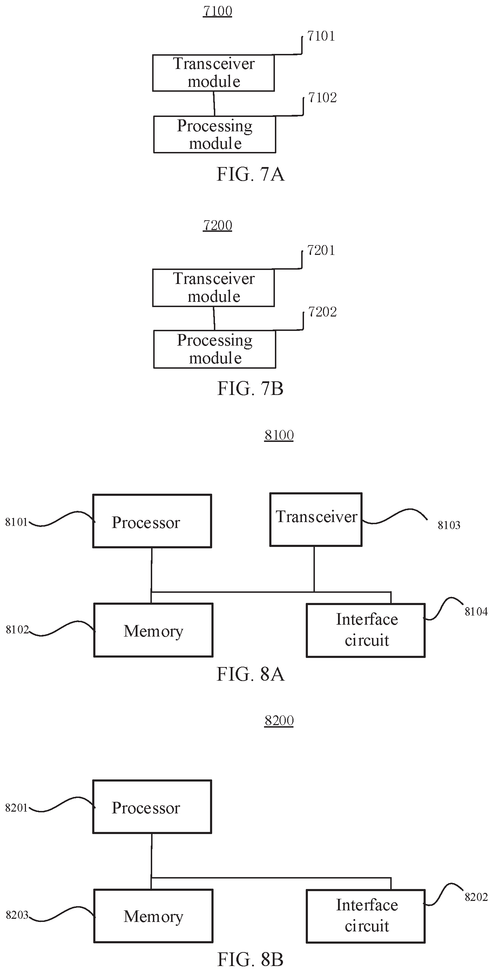

FIG. 7A is a schematic diagram of a terminal proposed in an embodiment of the present disclosure. As shown in FIG. 7A, the terminal 7100 includes at least one of a transceiver module 7101 or a processing module 7102. In some embodiments, the transceiver module 7101 is configured to send first information of a first decoding model to a network device, in which the first decoding model is used by the terminal to decode first data, the first information is used to indicate a similarity between second data obtained by decoding the first data using the first decoding model and a first measurement result, and the first data is obtained by encoding the first measurement result by the terminal. Optionally, the above transceiver module is used to execute at least one of the communication steps related to "receiving and/or sending" performed by the terminal 7100 in any of the above methods, which are not repeated here. Optionally, the above processing module is used to execute at least one of other steps performed by the terminal 7100 in any of the above methods, which are not repeated here.

Optionally, the processing module 7102 is used to execute at least one of the communication steps related to "processing" performed by the terminal in any of the above methods, which are not repeated here.

FIG. 7B is a schematic diagram of a network device proposed in an embodiment of the present disclosure. As shown in FIG. 7B, the network device 7200 includes at least one of a transceiver module 7201 or a processing module 7202. In some embodiments, the transceiver module 7201 is configured to receive first information of a first decoding model sent by a terminal, in which the first decoding model is used by the terminal to decode first data, the first information is used to indicate a similarity between second data obtained by decoding the first data using the first decoding model and a first measurement result, and the first data is obtained by encoding the first measurement result by the terminal. Optionally, the above transceiver module is used to execute at least one of the communication steps (for example, step S2101, which are not limited here) related to "receiving and/or sending" performed by the network device 7200 in any of the above methods, which are not repeated here.

Optionally, the processing module 7202 is used to execute at least one of the communication steps related to "processing" performed by the network device in any of the above methods, which are not repeated here.

In some embodiments, the transceiver module may include a sending module and/or a receiving module, and the sending module and the receiving module may be separate or integrated. Optionally, the transceiver module may be interchangeable with the transceiver.

In some embodiments, the processing module may be one module or include multiple submodules. Optionally, the multiple submodules respectively execute all or part of the steps required to be executed by the processing module. Optionally, the processing module may be replaced with the processor.

FIG. 8A is a schematic diagram of a communication device 8100 proposed in an embodiment of the present disclosure. The communication device 8100 may be a network device (e.g., the access network device, the core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 8100 may be used to implement the method described in the above method embodiments, and for details, reference may be made to the description in the above method embodiments.

As shown in FIG. 8A, the communication device 8100 includes one or more processors 8101. The processor 8101 may be a general-purpose processor or a dedicated processor, for example, a baseband processor or a central processing unit. The baseband processor may be used to process a communication protocol and communication data, and the central processing unit may be used to control the communication apparatus (such as a base station, a baseband chip, a terminal, a terminal chip, a DU or a CU, etc.) to execute a program and process data of the program. The communication device 8100 executes any of the above methods.

In some embodiments, the communication device 8100 further includes one or more memories 8102 for storing instructions. Optionally, all or part of the memory 8102 may be outside the communication device 8100.

In some embodiments, the communication device 8100 further includes one or more transceivers 8103. When the communication device 8100 includes one or more transceivers 8103, at least one of the communication steps (for example, step S2101, step S2102, step S2103, step S2104, which is not limited here) such as sending and/or receiving in the above methods is performed by the transceiver 8103.

In some embodiments, the transceiver may include a receiver and a transmitter, and the receiver and/or the transmitter may be separate or integrated. Optionally, the terms such as "transceiver", "transceiver unit", "transceiver machine", "transceiver circuit", etc. may be exchangeable with each other, the terms such as "transceiver", "transceiver unit", "transceiver machine", "transceiver circuit", etc. may be exchangeable with each other, and the terms such as "receiver", "receiving unit", "receiver", "receiving circuit", etc. may be exchangeable with each other.

In some embodiments, the communication device 8100 further includes one or more interface circuits 8104, which are connected to the memory 8102. Optionally, the interface circuit 8104 may be used to receive signals from the memory 8102 or other apparatuses, and may be used to send signals to the memory 8102 or other apparatuses. For example, the interface circuit 8104 may read instructions stored in the memory 8102 and send the instructions to the processor 8101.

The communication device 8100 described in the above embodiments may be the network device, or the terminal, but the scope of the communication device 8100 described in the present disclosure is not limited thereto, and the structure of the communication device 8100 may not be limited by FIG. 8A. The communication device may be an independent device or may be part of a larger device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, a vehicle-mounted device, a network device, a cloud device, an artificial intelligence device, etc.; (6) others, etc.

FIG. 8B is a schematic diagram of a chip 8200 proposed in an embodiment of the present disclosure. In case where the communication device 8100 may be a chip or a chip system, reference may be made to the schematic diagram of the chip 8200 shown in FIG. 8B, but the present disclosure is not limited thereto.

The chip 8200 includes one or more processors 8201, and the chip 8200 is used to execute any of the above methods.

In some embodiments, the chip 8200 further includes one or more interface circuits 8202, which are connected to the memory 8203. Optionally, the interface circuit 8202 may be used to receive signals from the memory 8203 or other apparatuses, and the interface circuit 8202 may be used to send signals to the memory 8203 or other apparatuses. For example, the interface circuit 8202 may read instructions stored in the memory 8203 and send the instructions to the processor 8201.

In some embodiments, the interface circuit 8202 executes at least one of the communication steps such as sending and/or receiving in the above methods, and the processor 8201 executes at least one of the other steps.

In some embodiments, the terms such as "interface circuit", "interface", "transceiver pin", and "transceiver" may be exchangeable with each other.

In some embodiments, the chip 8200 further includes one or more memories 8203 for storing instructions. Optionally, all or part of the memory 8203 may be outside the chip 8200.

The present disclosure also proposes a storage medium, on which instructions are stored, and when the instructions are executed on the communication device 8100, the communication device 8100 executes any of the above methods. Optionally, the storage medium is an electronic storage medium. Optionally, the storage medium is a computer-readable storage medium, but is not limited to thereto, and it may also be a storage medium readable by other apparatuses. Optionally, the storage medium may be a non-transitory storage medium, but is not limited to thereto, and it may also be a temporary storage medium.

The present disclosure also proposes a program product, which, when executed by the communication device 8100, enables the communication device 8100 to execute any of the above methods. Optionally, the program product is a computer program product.

The present disclosure also proposes a computer program, which, when executed on a computer, causes the computer to execute any one of the above methods.

## Claims

1. A communication method, comprising:
sending, by a terminal, first information of a first decoding model to a network device, wherein the first information is used to represent a similarity between the first decoding model set on the terminal and a second decoding model set on the network device, the first decoding model is used by the terminal to decode first data, and the second decoding model is used by the network device to decode the first data; the first data is obtained by encoding a first measurement result by the terminal.

2. The method of claim 1, wherein the first information comprises at least one of:
second information and third information, wherein the second information is used to represent a difference between second data obtained by decoding the first data using the first decoding model and the first measurement result, and the third information is used to represent a difference between a decoding performance of the second decoding model and a decoding performance of the first decoding model;
a sum of second information and third information;
a magnitude relationship between a sum of second information and third information and a first similarity threshold;
second information;
a magnitude relationship between second information and a second similarity threshold;
a similarity calculated based on a specific codebook type; or
a magnitude relationship between a sum of second information and third information and a similarity calculated based on a specific codebook type.

3. The method of claim 2, wherein the decoding performance of the first decoding model comprises a difference between the second data obtained by decoding the first data using the first decoding model and the first measurement result;
and/or the decoding performance of the second decoding model comprises a difference between third data obtained by decoding the first data using the second decoding model and the first measurement result.

4. The method of any one of claims 1-3, further comprising:
receiving configuration information sent by the network device, wherein the configuration information indicates a configuration of the terminal when sending the first information.

5. The method of claim 4, wherein the configuration information comprises at least one of:
a report configuration identification;
a type of the first information;
a time domain type;
a frequency domain type;
a resource for sending the first information;
a used codebook type; or
an associated downlink reference signal resource.

6. The method of claim 5, wherein the time domain type comprises any one of a semi-static type or an aperiodic type.

7. The method of claim 5, wherein the frequency domain type comprises any one of a wideband type or a narrowband type.

8. The method of claim 5, wherein the associated downlink reference signal resource comprises at least one of:
a reference signal resource identifier;
a reference signal resource set identifier;
a reference signal resource configuration identifier; or
a demodulation reference signal (DMRS) resource.

9. The method of any one of claims 1-8, further comprising:
receiving a reference signal sent by the network device; and
measuring the reference signal to obtain the first measurement result, wherein the first measurement result is used to determine the second information.

10. The method of claim 9, further comprising:
encoding the first measurement result using a first encoding model to obtain the first data;
decoding the first data using the first decoding model to obtain second data; and
determining the first information based on the second data and the first measurement result.

11. A communication method, comprising:
receiving first information of a first decoding model sent by a terminal, wherein the first information is used to represent a similarity between the first decoding model set on the terminal and a second decoding model set on the network device, the first decoding model is used by the terminal to decode first data, and the second decoding model is used by the network device to decode the first data; the first data is obtained by encoding a first measurement result by the terminal.

12. The method of claim 11, wherein the first information comprises at least one of:
second information and third information, wherein the second information is used to represent a difference between second data obtained by decoding the first data using the first decoding model and the first measurement result, and the third information is used to represent a difference between a decoding performance of the second decoding model and a decoding performance of the first decoding model;
a sum of second information and third information;
a magnitude relationship between a sum of second information and third information and a first similarity threshold;
second information;
a magnitude relationship between second information and a second similarity threshold;
a similarity calculated based on a specific codebook type; or
a magnitude relationship between a sum of second information and third information and a similarity calculated based on a specific codebook type.

13. The method of claim 12, wherein the decoding performance of the first decoding model comprises a difference between the second data obtained by decoding the first data using the first decoding model and the first measurement result; and/or
the decoding performance of the second decoding model comprises a difference between third data obtained by decoding the first data using the second decoding model and the first measurement result.

14. The method of any one of claims 11-13, further comprising:
sending configuration information to the terminal, wherein the configuration information indicates a configuration of the terminal when sending the first information.

15. The method of claim 14, wherein the configuration information comprises at least one of:
a report configuration identification;
a type of the first information;
a time domain type;
a frequency domain type;
a resource for sending the first information;
a used codebook type; or
an associated downlink reference signal resource.

16. The method of claim 15, wherein the time domain type comprises any one of a semi-static type or an aperiodic type.

17. The method of claim 15, wherein the frequency domain type comprises any one of a wideband type or a narrowband type.

18. The method of claim 15, wherein the associated downlink reference signal resource comprises at least one of:
a reference signal resource identifier;
a reference signal resource set identifier;
a reference signal resource configuration identifier; or
a demodulation reference signal (DMRS) resource.

19. The method of any one of claims 11-18, further comprising:
sending a reference signal to the terminal, wherein the reference signal is measured by the terminal to obtain the first measurement result, and the first measurement result is used to determine the first information.

20. A communication method, comprising:
sending, by a terminal, first information of a first decoding model to a network device, wherein the first information is used to represent a similarity between the first decoding model set on the terminal and a second decoding model set on the network device, the first decoding model is used by the terminal to decode first data, and the second decoding model is used by the network device to decode the first data; the first data is obtained by encoding a first measurement result by the terminal; and
receiving, by the network device, the first information of the first decoding model sent by the terminal.

21. A terminal, comprising: a transceiver module, configured for the terminal to send first information of a first decoding model to a network device, wherein the first information is used to represent a similarity between the first decoding model set on the terminal and a second decoding model set on the network device, the first decoding model is used by the terminal to decode first data, and the second decoding model is used by the network device to decode the first data; the first data is obtained by encoding a first measurement result by the terminal.

22. A network device, comprising:
a transceiver module, configured to receive first information of a first decoding model sent by a terminal, wherein the first information is used to represent a similarity between the first decoding model set on the terminal and a second decoding model set on the network device, the first decoding model is used by the terminal to decode first data, and the second decoding model is used by the network device to decode the first data; the first data is obtained by encoding a first measurement result by the terminal.

23. A terminal, comprising:
one or more processors;
wherein the terminal is configured to perform the communication method of any one of claims 1 to 10.

24. A network device, comprising:
one or more processors;
wherein the network device is configured to perform the communication method of any one of claims 11 to 19.

25. A communication system, comprising: a terminal and a network device;
wherein the terminal is configured to perform the communication method of any one of claims 1 to 10;
the network device is configured to perform the communication method of any one of claims 11 to 19.

26. A storage medium having instructions stored thereon, wherein when the instructions are running on a communication device, the communication device is caused to perform the communication method of any one of claims 1 to 10, or the communication method of any one of claims 11 to 19.
